# EUROPÄISCHE PATENTANMELDUNG

(11) **EP 3 113 343 A1**
(43) Veröffentlichungstag der Anmeldung: **04.01.2017**
(21) Anmeldenummer: 15174282.2
(22) Anmeldetag: 29.06.2015
(51) Int. Cl.: H02K 41/06

(54) **ELEKTRISCHE ANTRIEBSMASCHINE**

(71) Anmelder: Siemens Aktiengesellschaft, 80333 München (DE)
(72) Erfinder: Buhl, Michael Bernhard, 85567 Grafing (DE); Feiten, Wendelin, 85579 Neubiberg (DE); Klöpzig, Markus, 91320 Ebermannstadt (DE)

(57) **Zusammenfassung**

Die Erfindung beschreibt eine elektrische Antriebsmaschine, umfassend einen Ständer (10) mit einer ersten Anzahl an ersten magnetisch leitfähigen Abschnitten (11, ..., 16), einen Läufer (20) mit einer zweiten Anzahl an zweiten magnetisch leitfähigen Abschnitten (21, ..., 25) sowie einen zwischen dem Ständer (10) und dem Läufer (20) gebildeten Luftspalt (30). Die erfindungsgemäße elektrische Antriebsmaschine zeichnet sich dadurch aus, dass der Läufer (20) durch ein, durch den Ständer (10) erzeugbares, umlaufendes Magnetfeld so bewegbar ist, dass der Läufer (20) eine rotatorische Bewegung ausführt, der eine translatorische Bewegung überlagert ist. Dadurch geraten die zweiten magnetisch leitfähigen Abschnitte (21, ..., 25) des Läufers (20) aufeinander folgend in mechanischen Kontakt mit einem jeweiligen ersten magnetisch leitfähigen Abschnitt (11, ..., 16) des Ständers (10) oder weisen einen minimalen Abstand auf, so dass der Luftspalt (30) zwischen den in Kontakt befindlichen Abschnitten des Ständers (10) und des Läufers (20) temporär 0 oder nahezu 0 ist.

## Beschreibung

Die Erfindung betrifft eine elektrische Antriebsmaschine mit einem Ständer, einem Läufer und einem zwischen dem Ständer und dem Läufer gebildeten Luftspalt.

Die Größe des magnetischen Luftspaltes zwischen einem magnetisch leitfähigen Pol des Läufers (auch als Rotor bezeichnet) und einem gegenüberliegenden magnetisch leitfähigen Pol des Ständers (auch als Stator bezeichnet) in einer elektrischen Antriebsmaschine legt den magnetischen Widerstand in einem magnetischen Kreis fest. Je größer der Luftspalt ist, desto größer wird der magnetische Widerstand, wodurch bei ansonsten konstanten Parametern das erzeugbare Drehmoment der elektrischen Antriebsmaschine negativ beeinflusst wird. Andererseits wird das Drehmoment der elektrischen Antriebsmaschine, umso größer, je kleiner der Luftspalt zwischen Läufer und Ständer ist. Man ist daher bei der Konstruktion sowie bei der Montage einer elektrischen Antriebsmaschine bestrebt, den Luftspalt so klein wie möglich zu halten.

Ein weiterer Faktor bei der Auslegung von elektrischen Antriebsmaschinen ist das erzeugbare Abtriebsmoment. Um das Drehmoment zu erhöhen bzw. an eine gewünschte Anwendung anzupassen, ist entweder der magnetisch Fluss zu erhöhen oder der Abtrieb mit einem Getriebe bzw. einer Untersetzungsstufe zu versehen. Dies macht sich nachteilig auf den benötigten Bauraum bemerkbar. Darüber hinaus sind Getriebe wartungsintensiv.

Die Aufgabe der Erfindung besteht darin, eine elektrische Antriebsmaschine anzugeben, welche ein hohes Drehmoment am Abtrieb bereitstellen kann.

Diese Aufgabe wird gelöst durch eine elektrische Antriebsmaschine gemäß den Merkmalen des Patentanspruchs 1. Vorteilhafte Ausgestaltungen ergeben sich aus den abhängigen Patentansprüchen.

Zur Lösung der Aufgabe wird eine elektrische Antriebsmaschine vorgeschlagen, die einen Ständer, einen Läufer sowie einen zwischen dem Läufer und dem Ständer gebildeten Luftspalt aufweist. Der Ständer weist eine erste Anzahl an ersten magnetisch leitfähigen Abschnitten auf. Diese ersten magnetisch leitfähigen Abschnitte sind durch Pole des Ständers gebildet. Der Läufer umfasst eine zweite Anzahl an zweiten magnetisch leitfähigen Abschnitten. Die zweiten magnetisch leitfähigen Abschnitte sind durch Anlageflächen aus einem ferromagnetischen Material gebildet. Die erste Anzahl an ersten magnetisch leitfähigen Abschnitten und die zweite Anzahl an zweiten magnetisch leitfähigen Abschnitten sind unterschiedlich.

Erfindungsgemäß ist der Läufer durch ein, durch den Ständer erzeugbares, umlaufendes Magnetfeld so bewegbar, dass der Läufer eine rotatorische Bewegung ausführt, der eine translatorische Bewegung überlagert ist. Die translatorische Bewegung erfolgt in einer Ebene, welche senkrecht zur Drehrichtung des Läufers verläuft. Hierdurch bedingt beschreibt der Läufer eine relativ zu dem Ständer exzentrische Drehbewegung. Dadurch geraten die zweiten magnetisch leitfähigen Abschnitte des Läufers aufeinander folgend in mechanischen Kontakt mit einem jeweiligen ersten magnetisch leitfähigen Abschnitt des Ständers oder weisen einen minimalen Abstand auf, so dass der Luftspalt zwischen den in Kontakt befindlichen Abschnitten des Ständers und des Läufers temporär 0 oder nahezu 0 ist.

Die vorgeschlagene elektrische Maschine greift das Prinzip eines exzentrisch umlaufenden Körpers eines sog. Cyclo-Getriebes auf, wobei der exzentrisch umlaufende Körper der Läufer der elektrischen Antriebsmaschine ist. Anstelle einer mechanischen exzentrischen Anregung, wie beim bekannten Cyclo-Getriebe, wird der Läufer durch das durch den Ständer erzeugbare, umlaufende Magnetfeld so bewegt, dass er eine rotierende Bewegung ausführt, ähnlich einem Cyclo-Getriebe. Wie bei diesem entsteht dabei regelmäßig ein Kontakt zwischen dem Läufer und dem Ständer, wodurch der Luftspalt immer wieder eliminiert ist. Im Gegensatz zu klassischen Reluktanzmotoren kann hierdurch der magnetische Widerstand im magnetischen Kreis der elektrischen Antriebsmaschine reduziert werden, bei gleichzeitig verbessertem Wirkungsgrad.

Durch das Konstruktionsprinzip ist in der elektrischen Antriebsmaschine eine stark untersetzende Getriebestufe integriert. Im Gegensatz zu aus dem Stand der Technik bekannten elektrischen Antriebsmaschinen ist dadurch das Vorsehen einer zusätzlichen, externen Getriebestufe zur Erhöhung des Drehmoments oder zur Reduktion der Drehzahl des Abtriebs nicht erforderlich. Bei der vorgeschlagenen Antriebsmaschine ist die Abtriebsdrehzahl um ein Vielfaches kleiner als die Frequenz, mit der das Magnetfeld umläuft. Dementsprechend erhöht sich das Drehmoment.

Ein weiterer Vorteil der Antriebsmaschine besteht darin, dass in den Positionen, in denen der Luftspalt zwischen dem Läufer und dem Ständer temporär eliminiert und ansonsten variabel, aber klein, ist, die Anordnung ein sehr großes Haltemoment aufbringen kann, ohne dass hierzu gesonderte mechanische und/oder elektrische Vorkehrungen getroffen werden müssen.

Gemäß einer zweckmäßigen Ausgestaltung ist der Luftspalt zwischen den in Kontakt befindlichen Abschnitten des Ständers und des Läufers zumindest abschnittsweise 0 oder nahezu 0, d.h. nimmt einen sehr kleinen Wert im Vergleich zu üblichen Luftspalten an. Dadurch kann der Verschleiß gering gehalten werden. Der Luftspalt zwischen einem zweiten magnetisch leitfähigen Abschnitt des Läufers und einem magnetisch aktiven Abschnitt kann temporär auch vollständig 0 sein, wenn die Abschnitte von Läufer und Ständer, die im magnetischen Kreis liegen, vollständig aufeinander liegen.

Gemäß einer weiteren Ausgestaltung ist zu einem gegebenen Zeitpunkt genau einer der ersten magnetisch leitfähigen Abschnitte des Ständers bestromt, wobei der bestromte Abschnitt einen aktiven, ersten magnetisch leitfähigen Abschnitt darstellt. Mit anderen Worten bedeutet dies, dass zu dem gegebenen Zeitpunkt außer dem aktiven, ersten magnetisch leitfähigen Abschnitt kein weiterer erster magnetisch leitfähiger Abschnitt bestromt ist und damit auch kein Magnetfeld erzeugt. Dadurch kann z.B. bei entsprechender Ausgestaltung des Ständers und des Läufers eine kippende Bewegung in Folge des umlaufenden Magnetfelds hervorgerufen werden, so dass der entgegen der Rotationsrichtung des Läufers folgende Abschnitt durch den aktiven Abschnitt des Ständers angezogen wird und mit diesem in Kontakt gerät.

Gemäß einer weiteren Ausgestaltung ist die Richtung der Rotation des Läufers entgegengesetzt zur Richtung des umlaufenden Magnetfelds.

Es ist weiterhin vorgesehen, dass derjenige magnetisch leitfähige Abschnitt des Ständers durch eine Steuerung der Antriebsmaschine aktiv schaltbar ist, der entgegen der Rotationsrichtung des Läufers demjenigen ersten magnetisch leitfähigen Abschnitt folgt, der den Kontakt oder minimalen Abstand zu dem zweiten Abschnitt des Läufers aufweist. Hierdurch kann eine quasi-kontinuierliche Rotationsbewegung des Läufers erzeugt werden. Hierzu können Sensoren eingesetzt werden, mit deren Hilfe erkannt wird, ob bzw. wann ein Luftspalt geschlossen wurde und welcher der magnetisch leitfähigen Abschnitte als nächstes bestromt werden soll.

Um die Bewegung des Läufers durch das umlaufende Magnetfeld zu ermöglichen, ist der Läufer aus einem ferromagnetischen Material gebildet. In einer zweckmäßigen Ausgestaltung ist es ausreichend, wenn zumindest die dem Ständer zugewandten Flächen des Läufers ferromagnetisch sind. Im einfachsten Fall kann der Läufer aus einem gebogenen ferromagnetischen Blech bestehen.

Gemäß einer weiteren Ausgestaltung unterscheidet sich die erste Anzahl an ersten magnetisch leitfähigen Abschnitten des Ständers und die zweite Anzahl an zweiten magnetisch leitfähigen Abschnitten des Läufers um 1. Dabei ist es zweckmäßig, wenn die Flächen der ersten Anzahl an ersten magnetisch leitfähigen Abschnitten und die Flächen der zweiten Anzahl an zweiten magnetisch leitfähigen Abschnitten die gleiche Gestalt und Größe aufweisen.

Im Querschnitt kann der Ständer ein regelmäßiges Vieleck mit n Ecken sein. Insbesondere kann der Läufer ein Innenläufer sein, der im Querschnitt ein regelmäßiges Vieleck mit n-1 Ecken ist. Alternativ kann der Läufer ein Außenläufer sein, der im Querschnitt ein regelmäßiges Vieleck mit n+1 Ecken ist.

Die Anzahl n der Ecken kann prinzipiell beliebig gewählt werden. Die optimale Anzahl n der Ecken kann durch Versuche oder Berechnung ermittelt werden. Es ist zweckmäßig, wenn die Anzahl n der Ecken zwischen 6 und 10, insbesondere zwischen 6 und 8, beträgt.

Ecken im Sinne der vorliegenden Beschreibung können Ecken im strengen Sinne ihrer Definition sein, d.h. Punkte, an denen die begrenzenden Linien der benachbarten ersten magnetisch leitfähigen Abschnitte bzw. der benachbarten zweiten magnetisch leitfähigen Abschnitte aufeinander treffen. Ecken können jedoch auch abgerundete Abschnitte der aufeinander treffenden, benachbarten ersten magnetisch leitfähigen Abschnitte bzw. zweiten magnetisch leitfähigen Abschnitte sein.

Die ersten bzw. zweiten magnetisch leitfähigen Abschnitte der Vielecke des Ständers und/oder des Läufers können in einer Seitenansicht, d.h. in einer Ansicht in Richtung parallel zu der Achse der Rotation des Läufers, gerade und/oder abschnittsweise gewölbt sein. Bei gerade ausgebildeten ersten bzw. zweiten magnetisch leitfähigen Abschnitten ist sichergestellt, dass, wenn diese in Kontakt miteinander geraten, der Luftspalt über deren gesamte Fläche 0 ist. Hierdurch lässt sich ein besonders hohes Haltemoment erzielen. Die Kontaktfläche kann auch eine Zahnstruktur aufweisen. Durch diese in elektrischen Maschinen (z.B. bei Schrittmotoren) übliche Anordnung kann der Fluss gleichmäßiger verteilt werden.

Zweckmäßigerweise ist der Läufer über einen Exzentermechanismus mit einem Abtrieb gekoppelt. Der Exzentermechanismus kann eine Anzahl an Bohrungen und/oder Zapfen und/oder Hebel an dem Rotor und/oder einer Abtriebswelle umfassen. Hierzu können beispielsweise die von dem eingangs genannten Cyclo-Getriebe bekannten Mechanismen als Ausgangspunkt für Überlegungen herangezogen werden.

Es ist weiterhin zweckmäßig, wenn in axialer Richtung ein um 180° versetzt angeordneter, zweiter Läufer vorgesehen ist. Hierdurch kann aufgrund der exzentrischen Rotation der Läufer eine Unwucht der einzelnen Läufer kompensiert werden, da durch die zwei Läufer ein gemeinsamer Schwerpunkt gewährleistet werden kann. Beide Läufer sind mit dem Abtrieb, z.B. einer rotierenden Welle, verbunden.

Die Erfindung wird nachfolgend näher anhand von Ausführungsbeispielen in der Zeichnung näher beschrieben. Es zeigen:
- Fig. 1: eine schematische Darstellung eines ersten Ausführungsbeispiels einer erfindungsgemäßen elektrischen Antriebsmaschine in einer Schnittansicht, wobei sich ein Läufer in einer ersten Kontaktposition befindet;
- Fig. 2: die Antriebsmaschine aus Fig. 1, wobei sich der Läufer in einer zweiten Kontaktposition befindet;
- Fig. 3: einen Schnitt durch die Antriebsmaschine aus Fig. 1 längs der Linie III-III;
- Fig. 4: einen Schnitt durch die Antriebsmaschine gemäß Fig. 4 längs der Linie IV-IV;
- Fig. 5: eine schematische Darstellung eines zweiten Ausführungsbeispiels einer erfindungsgemäßen elektrischen Antriebsmaschine in einer Schnittansicht;
- Fig. 6: eine Schnittdarstellung durch die in Fig. 5 gezeigte elektrische Antriebsmaschine längs der Linie VI-VI; und
- Fig. 7: eine alternative Variante des zweiten Ausführungsbeispiels gemäß Fig. 5 in einer Schnittansicht.

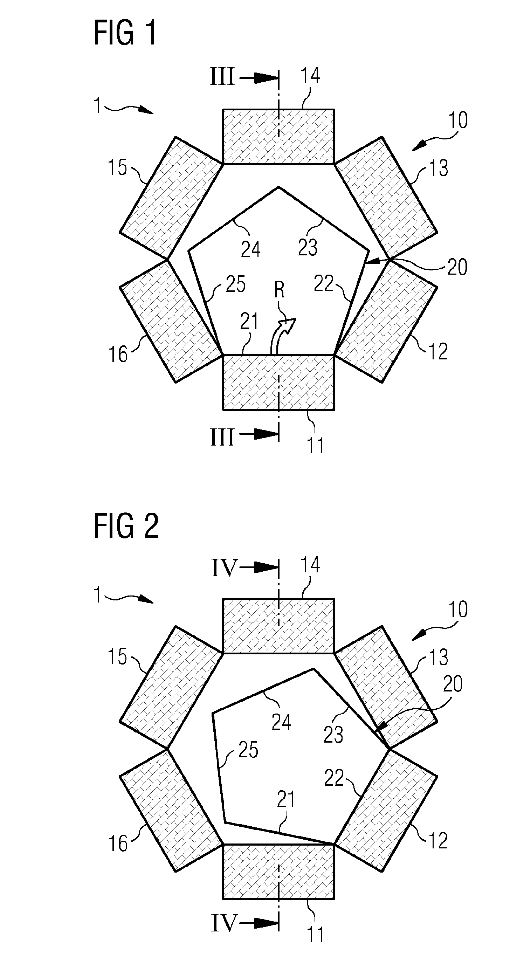

Die Figuren 1 bis 4 zeigen eine Prinzipdarstellung einer erfindungsgemäßen elektrischen Antriebsmaschine 1 gemäß einer ersten Ausführungsvariante. Die Antriebsmaschine ist als rotierende Maschine ausgebildet, wobei in den nachfolgend beschriebenen Ausführungsbeispielen lediglich das Prinzip eines Innenläufers illustriert ist. Grundsätzlich kann das nachfolgend beschriebene Prinzip auch auf einen Außenläufer angewendet werden. In der in Figuren 1 und 2 jeweils gezeigten Schnittansicht der elektrischen Antriebsmaschine 1 erstreckt sich eine Drehachse des Läufers senkrecht zur Blattrichtung.

Die elektrische Antriebsmaschine 1, die in den Figuren 1 und 2 in einem Schnitt dargestellt ist, umfasst einen Ständer 10, der beispielhaft sechs erste magnetisch leitfähige Abschnitte 11, ..., 16 umfasst. Die ersten magnetisch leitfähigen Abschnitte 11, ..., 16 stellen Pole des Ständers dar. Die ersten magnetisch leitfähigen Abschnitte 11, ..., 16 sind in der geometrischen Gestalt eines regelmäßigen Sechsecks angeordnet. Jeder der ersten magnetisch leitfähigen Abschnitte 11, ..., 16 umfasst eine in der Schnittdarstellung der Fig. 1 nicht sichtbare bzw. dargestellte Spule auf, welche durch eine ebenfalls nicht näher dargestellte Steuerung der Antriebsmaschine 1 zur Erzeugung eines Magnetfelds bestrombar ist. Durch die Steuerung lässt sich jeder einzelne der ersten magnetisch leitfähigen Abschnitte 11, ..., 16 zur Erzeugung eines entsprechenden Magnetfeldes selektiv aktiv schalten. Wie aus der nachfolgenden Beschreibung näher ersichtlich werden wird, ist zu jedem gegebenen Zeitpunkt lediglich genau einer der ersten magnetisch leitfähigen Abschnitte 11, ..., 16 des Ständers 10 bestromt, wobei dieser dann einen aktiven, ersten magnetisch leitfähigen Abschnitt darstellt.

Im Inneren des Ständers 10 ist ein Läufer 20 angeordnet. In der Schnittdarstellung der Figuren 1 und 2 weist der Läufer 20 die Gestalt eines regelmäßigen Fünfecks mit fünf zweiten magnetisch leitfähigen Abschnitten 21, ..., 25 auf. Der Läufer 20 ist aus einem ferromagnetischen Material gebildet oder weist ein solches zumindest auf seinen, dem Ständer 20 zugewandten Oberflächen auf. Beispielsweise kann der Läufer 20 aus einem ferromagnetischen Blech durch entsprechende Biegevorgänge gebildet sein. Der Läufer 20 ist über einen nicht dargestellten Exzentermechanismus mit einem Abtrieb (z.B. einer Welle) gekoppelt. Der Exzentermechanismus kann beispielsweise hierzu Bohrungen und/oder Zapfen und/oder Hebel umfassen, wobei entsprechende Anordnungen von Cyclo-Getrieben bekannt sind.

Die ersten und zweiten magnetisch leitfähigen Abschnitte 11, ..., 16 des Ständers 10 und 21, ..., 25 des Läufers 20 entsprechen einander hinsichtlich ihrer Größe.

In den vorliegenden Ausführungsbeispielen sind die ersten magnetisch leitfähigen Abschnitte 11, ..., 16 des Ständers 10 und die zweiten magnetisch leitfähigen Abschnitte 21, ..., 25 des Läufers 20 in einer Seitenansicht jeweils eben bzw. gerade ausgeführt. Entgegen dieser vereinfachten Darstellung könnten die ersten und/oder zweiten magnetisch leitfähigen Abschnitte zusätzlich oder alternativ auch abschnittsweise gewölbt ausgeführt sein. Ebenso könnten die Übergänge zwischen benachbart angeordneten ersten magnetisch leitfähigen Abschnitten 11, ..., 16 bzw. zweiten magnetisch leitfähigen Abschnitten 21, ..., 25 anstelle eines eckigen Übergangs auch nach innen oder außen gewölbt sein.

Der Läufer 20 ist durch ein durch den Ständer 10 erzeugbares, umlaufendes Magnetfeld so bewegbar, dass der Läufer 20 eine rotatorische Bewegung ausführt, der eine translatorische Bewegung überlagert ist. Die Bewegung des Rotors ist in Fig. 1 durch den Pfeil R exemplarisch verdeutlicht. Der Läufer beschreibt eine relativ zu dem Ständer 10 exzentrische Bewegung. Das umlaufende Magnetfeld wird dadurch erzeugt, dass beispielsweise im Gegenuhrzeigersinn, beginnend beim ersten magnetisch leitfähigen Abschnitt 11, fortlaufend jeder weitere erste magnetisch leitfähige Abschnitt bestromt wird. Dies bedeutet, auf den bestromten ersten magnetisch leitfähigen Abschnitt 11 folgt die Bestromung des ersten magnetisch leitfähigen Abschnitts 12, anschließend die Bestromung des ersten magnetisch leitfähigen Abschnitts 13, usw. Durch die Ausführung der rotatorischen Bewegung, der eine translatorische Bewegung des Läufers 20 überlagert ist, geraten die zweiten magnetisch leitfähigen Abschnitte 21, ..., 25 des Läufers 20 aufeinander folgend in mechanischen Kontakt mit einem jeweiligen aktiven, ersten magnetisch leitfähigen Abschnitt 11, ..., 16 des Stators 10.

In Fig. 1 stellt der erste magnetisch leitfähige Abschnitt 11 den aktiven Abschnitt des Ständers 10 dar. Dadurch gerät bzw. ist zum betrachteten Zeitpunkt der zweite magnetisch leitfähige Abschnitt 21 des Läufers 20 in Kontakt mit dem Abschnitt 11. Aufgrund der eben ausgebildeten Abschnitte 11 und 21 ist der Luftspalt zwischen den in Kontakt befindlichen Abschnitten 11, 21 des Ständers 10 und des Läufers 20 temporär 0. Die zu den anderen ersten magnetisch leifähigen Abschnitten 12, ..., 16 gebildeten Abstände sind magnetisch nicht wirksam, da keine dieser Spulen bestromt ist.

Anschließend erfolgt, wie beschrieben, die Bestromung des magnetisch leitfähigen Abschnitts 12, wodurch der Läufer 20 in Richtung des ersten, magnetisch leitfähigen Abschnitts 12 kippt (Pfeil R in Fig. 1), wobei dessen zweite magnetisch leitfähige Abschnitt 22 in Kontakt zu dem aktiven, ersten magnetisch leitfähigen Abschnitt 12 gerät. Dies ist in Fig. 2 dargestellt. Das beschriebene Vorgehen wiederholt sich entsprechend.

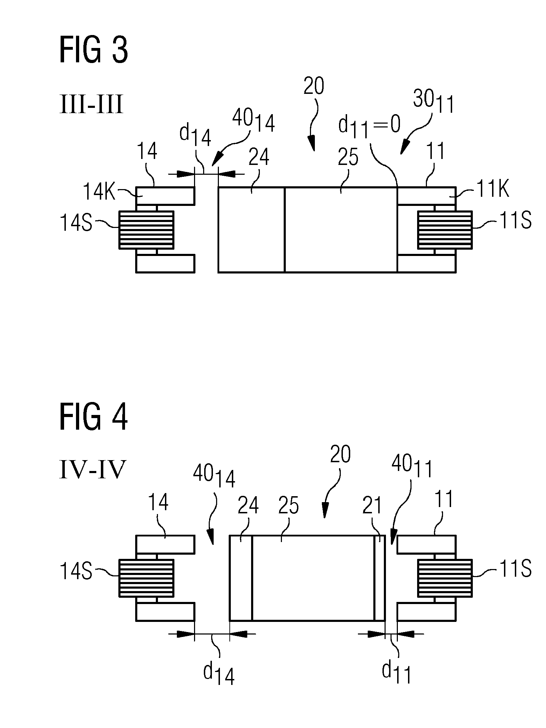

Fig. 3 zeigt einen Schnitt durch Fig. 1 längs der Linie III-III. Fig. 4 zeigt einen Schnitt durch Fig. 2 längs der Linie IV-IV. Aus dieser Darstellung ist einerseits ersichtlich, dass die magnetisch leitfähigen Abschnitte 11, ..., 16 (wobei in den Schnittdarstellungen nur jeweils die magnetisch leitfähigen Abschnitte 11, 14 dargestellt sind) durch einen hufeisenförmigen Kern 11K, 14K mit einer jeweiligen Spule 11S, 14S gebildet sind. Wie ohne weiteres aus Fig. 3 hervorgeht, ist der zwischen dem magnetisch leitfähigen Abschnitt 11 und dem zweiten magnetisch leitfähigen Abschnitt 21 gebildete Luftspalt 30 temporär 0 (d₁₁ = 0). Mit dem Bezugszeichen 40₁₄ ist der Abstand 40 der Breite d₁₄ zwischen dem ersten magnetisch leitfähigen Abschnitt 14 und dem Rotor 20 gezeigt, der jedoch magnetisch nicht wirksam ist, da die Spule 14S nicht bestromt ist.

In der in Fig. 4 gezeigten Darstellung ist zwischen dem magnetisch leitfähigen Abschnitt 11 des Ständers 10 und dem Rotor 20 ein Abstand 40₁₁ und zwischen dem ersten magnetisch leitfähigen Abschnitt 14 und dem Läufer 20 gebildete Abstand 40₁₄ magnetisch nicht aktiv. Die Abstände 40₁₄ und 40₁₁ mit den Breiten d₁₄ und d₁₁ sind jeweils größer als 0.

Die durch das Magnetfeld erzeugte umlaufende Bewegung des Läufers 20 ist ähnlich der rotierenden Bewegung bei einem Cyclo-Getriebe.

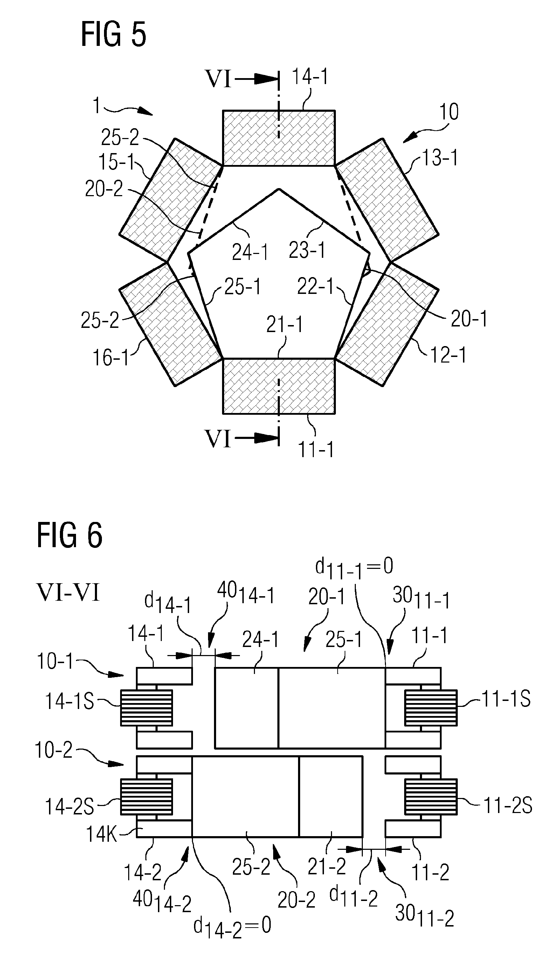

Um die Unwucht des umlaufenden Läufers 20 zu kompensieren, kann, wie dies Fig. 5 in einer Schnittansicht zeigt, ein zweiter Läufer 20-2 vorgesehen sein, der um 180° versetzt exzentrisch zu dem ersten Läufer 20-1 durch das Magnetfeld umläuft. Gemäß dieser Ausgestaltung wird ein für jeden Läufer 20-1, 20-2 notwendiges Magnetfeld getrennt erzeugt. Dabei werden die jeweils gegenüber liegend angeordneten ersten, magnetisch leitfähigen Abschnitte bestromt. In der Darstellung gemäß Fig. 5 sind dies die ersten magnetisch leitfähigen Abschnitte 11-1 in Bezug auf den ersten Läufer 20-1 und 14-2 in Bezug auf den zweiten Läufer 20-2. Dies geht besser aus der Schnittdarstellung der Fig. 6 hervor, welche einen Schnitt längs der Linie VI-VI in Fig. 5 darstellt. Der gemeinsame Schwerpunkt der beiden Läufer 20-1, 20-2 bleibt dabei während einer Rotation der Läufer 20-1, 20-1 in Ruhe.

Beide Läufer 20-1, 20-2 sind über einen gemeinsamen Exzentermechanismus mit einem nicht dargestellten Abtrieb gekoppelt. Der Exzentermechanismus kann beispielsweise hierzu Bohrungen und/oder Zapfen und/oder Hebel umfassen, wobei entsprechende Anordnungen von Cyclo-Getrieben bekannt sind.

Wie aus der schematischen Darstellung von Fig. 6 hervorgeht, ist jedem der Läufer 20-1, 20-2 eine jeweilige Statoranordnung 10-1, 10-2 zugeordnet. Dies bedeutet, jeder der Ständer 10-1, 10-2 weist die in Fig. 5 dargestellten sechs ersten magnetisch leitfähigen Abschnitte 11-1, ..., 16-1 bzw. 11-2, ..., 16-2 auf. Die magnetisch leitfähigen Abschnitte sind somit doppelt vorhanden.

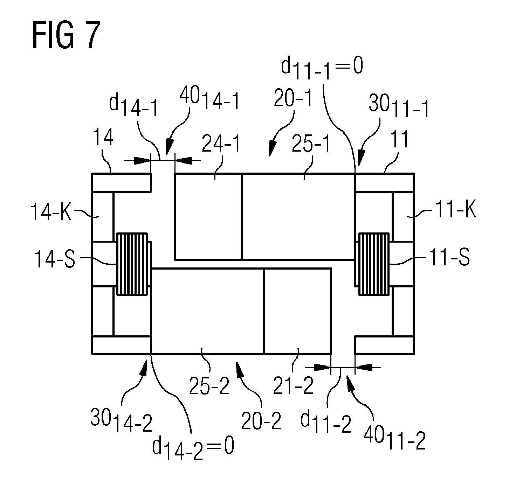

Fig. 7 zeigt demgegenüber eine vorteilhafte Ausgestaltung, bei der zur Bereitstellung der magnetisch leitfähigen Abschnitte jeweils ein E-förmiger Kern verwendet wird, wobei um den mittleren Schenkel jeweils eine einzige Spule 11-S, ..., 16-S vorgesehen ist. In der Schnittdarstellung von Fig. 7 sind lediglich die E-förmigen Kerne 11K, 14K der ersten magnetisch leitfähigen Abschnitte 11 und 14 sowie deren zugeordnete Spulen 11-S und 14-S auf dem mittleren Schenkel erkennbar. In der in Fig. 7 gezeigten Darstellung werden die beiden Spulen 11-S und 14-S gleichzeitig bestromt, so dass der erste Läufer 20-1 einen Luftspalt 30₁₁₋₁ der Breite d₁₁₋₁ = 0 relativ zum ersten magnetisch leitfähigen Abschnitt 11 aufweist. Korrespondierend hierzu weist der zweite Läufer 20-2 aufgrund der Bestromung des E-förmigen Kerns 14 einen Luftspalt 30₁₄₋₂ der Breite d₁₄₋₂ = 0 relativ zu dem ersten magnetisch leitfähigen Abschnitt 14 auf. Die jeweils gegenüber liegenden Abstände 40₁₄₋₁ und 40₁₁₋₂ mit den Breiten d₁₄₋₁ und d₁₁₋₂ sind so groß, dass trotz bestromter Magnetspulen 11S, 14S kein magnetischer Kreis geschlossen werden kann.

Im vorliegenden Ausführungsbeispiel wurde die elektrische Antriebsmaschine durch einen als Sechseck ausgebildeten Stator und einen als Fünfeck ausgebildeten Läufer beschrieben. Neben dieser dargestellten Geometrie sind viele andere Geometrien denkbar. Insbesondere können Ständer und Läufer auch als andere Vielecke ausgebildet sein, wobei sich die Anzahl der Ecken bzw. magnetisch leitfähigen Abschnitte immer um 1 unterscheidet. Es ist lediglich zu berücksichtigen, dass das Abrollen des Läufers im Ständer zu einer Rotation des Läufers führt. Dabei ergibt sich, dass die Richtung der Rotation des Läufers zur Richtung des umlaufenden Magnetfelds entgegengesetzt ist.

## Patentansprüche

1. Elektrische Antriebsmaschine, umfassend einen Ständer (10) mit einer ersten Anzahl an ersten magnetisch leitfähigen Abschnitten (11, ..., 16), einen Läufer (20) mit einer zweiten Anzahl an zweiten magnetisch leitfähigen Abschnitten (21, ..., 25) sowie einen zwischen dem Ständer (10) und dem Läufer (20) gebildeten Luftspalt (30),
**dadurch gekennzeichnet, dass**
der Läufer (20) durch ein durch den Ständer (10) erzeugbares, umlaufendes Magnetfeld so bewegbar ist, dass der Läufer (20) eine rotatorische Bewegung ausführt, der eine translatorische Bewegung überlagert ist, wodurch die zweiten magnetisch leitfähigen Abschnitte (21, ..., 25) des Läufers (20) aufeinander folgend in mechanischen Kontakt mit einem jeweiligen ersten magnetisch leitfähigen Abschnitt (11, ..., 16) des Ständers (10) geraten oder einen minimalen Abstand aufweisen, so dass der Luftspalt (30) zwischen den in Kontakt befindlichen Abschnitten des Ständers (10) und des Läufers (20) temporär 0 oder nahezu 0 ist.

2. Antriebsmaschine nach Anspruch 1, **dadurch gekennzeichnet, dass** der Luftspalt (30) zwischen den in Kontakt befindlichen Abschnitten des Ständers (10) und des Läufers (20) zumindest abschnittsweise 0 oder nahezu 0 ist.

3. Antriebsmaschine nach Anspruch 1 oder 2, **dadurch gekennzeichnet, dass** zu einem gegebenen Zeitpunkt genau einer der ersten magnetisch leitfähigen Abschnitte (11, ..., 16) des Ständers (10) bestromt ist, wobei der bestromte Abschnitt (11, ..., 16) einen aktiven, ersten magnetisch leitfähigen Abschnitt darstellt.

4. Antriebsmaschine nach einem der vorhergehenden Ansprüche, **dadurch gekennzeichnet, dass** die Richtung der Rotation des Läufers (20) zur Richtung des umlaufenden Magnetfelds entgegengesetzt ist.

5. Antriebsmaschine nach einem der vorhergehenden Ansprüche, **dadurch gekennzeichnet, dass** derjenige erste magnetisch leitfähige Abschnitt des Ständers (10) durch eine Steuerung aktiv schaltbar ist, der entgegen der Rotationsrichtung des Läufers (20) demjenigen ersten magnetisch leitfähigen Abschnitt folgt, der den Kontakt oder minimalen Abstand zu dem zweiten Abschnitt des Läufers (20) aufweist.

6. Antriebsmaschine nach einem der vorhergehenden Ansprüche, **dadurch gekennzeichnet, dass** der Läufer (20) aus einem ferromagnetischen Material gebildet ist.

7. Antriebsmaschine nach Anspruch 6, **dadurch gekennzeichnet, dass** zumindest die dem Ständer (10) zugewandten Flächen (21, ..., 25) des Läufers (20) ferromagnetisch sind.

8. Antriebsmaschine nach einem der vorhergehenden Ansprüche, **dadurch gekennzeichnet, dass** sich die erste Anzahl an ersten magnetisch leitfähigen Abschnitten (11, ..., 16) des Ständers (10) und die zweite Anzahl an zweiten magnetisch leitfähigen Abschnitten (21, ..., 25) des Läufers (20) um 1 unterscheidet.

9. Antriebsmaschine nach einem der vorhergehenden Ansprüche, **dadurch gekennzeichnet, dass** der Ständer (10) im Querschnitt ein regelmäßiges Vieleck mit n Ecken ist.

10. Antriebsmaschine nach Anspruch 9, **dadurch gekennzeichnet, dass** der Läufer (20) ein Innenläufer ist, der im Querschnitt ein regelmäßiges Vieleck mit n-1 Ecken ist.

11. Antriebsmaschine nach Anspruch 9, **dadurch gekennzeichnet, dass** der Läufer (20) ein Außenläufer ist, der im Querschnitt ein regelmäßiges Vieleck mit n+1 Ecken ist.

12. Antriebsmaschine nach einem der Ansprüche 9 bis 11, **dadurch gekennzeichnet, dass** die Anzahl n der Ecken zwischen 6 und 10, insbesondere zwischen 6 und 8, beträgt.

13. Antriebsmaschine nach einem der Ansprüche 9 bis 11, **dadurch gekennzeichnet, dass** die ersten und/oder zweiten magnetisch leitfähigen Abschnitte (11, ..., 16; 21, ..., 25) der Vielecke in einer Seitenansicht gerade und/oder abschnittsweise gewölbt sind.

14. Antriebsmaschine nach einem der vorhergehenden Ansprüche, **dadurch gekennzeichnet, dass** der Läufer (20) über einen Exzentermechanismus mit einem Abtrieb gekoppelt ist.

15. Antriebsmaschine nach einem der vorhergehenden Ansprüche, **dadurch gekennzeichnet, dass** in axialer Richtung ein um 180° versetzt angeordneter, zweiter Läufer (20-2) vorgesehen ist.
